# EUROPÄISCHE PATENTSCHRIFT

(11) **EP 0 899 244 B1**
(45) Veröffentlichungstag und Bekanntmachung des Hinweises auf die Patenterteilung: **24.11.2004**
(21) Anmeldenummer: 98116134.2
(22) Anmeldetag: 26.08.1998
(51) Int. Cl.: C03C 25/10, G02B 6/16, G01N 21/45

(54) **Faseroptischer Sensor**
Optical fibre sensor
Capteur à fibre optique

(30) Priorität: 28.08.1997 DE 19737633
(43) Veröffentlichungstag der Anmeldung: 03.03.1999
(73) Patentinhaber: Fraunhofer-Gesellschaft zur Förderung der angewandten Forschung e.V., 80686 München (DE)
(72) Erfinder: Rose, Klaus, Dr. Dipl.-Chem., 97318 Kitzingen (DE); Heinrich, Matthias, Dipl.-Chem., 97076 Würzburg (DE)

(56) Entgegenhaltungen:
- EP-A- 0 450 624
- EP-A- 0 487 992
- DE-A- 3 526 348
- DE-A- 19 627 220

## Beschreibung

Die Erfindung betrifft einen faseroptischen Sensoren gemäß Anspruch 1, bestehend aus einem Lichtleiter und einer speziellen sensitiven Schicht auf Acrylatsiloxan-Basis.

Zunehmend steigende Anforderungen in den Bereichen Arbeitssicherheit und Umweltschutz ließen den Bedarf an Sensoren zur Erkennung erhöhter Schadstoffkonzentrationen stark anwachsen. Aber auch die Steuerung und Regelung industrieller Prozesse oder die Stofferkennung in der Medizin sind wichtige Anwendungsfelder für Sensoren.

Die rasche Entwicklung in der Miniaturisierung elektronischer Bauteile führte zunächst zum verstärkten Einsatz elektrisch arbeitender Systeme. Aber in den letzten Jahren konnten die optischen Meßverfahren bzgl. Leistungsfähikeit deutlich an Boden gewinnen.

Vor allem, da sie gegenüber elektrischen Verfahren wesentliche Vorteile besitzen;
- sie arbeiten strom- und spannungsfrei,
- sie sind unempfindlich gegenüber elektromagnetischer Störfelder, Hochspannung und hohe Temperaturen,
- es ist kein externes Referenzsignal nötig,
- für die Detektion ist ein breiter Wellenlängenbereich verfügbar (UV bis IR).

Das Basismaterial für optische Sensoren als lichtleitendes Medium bildet hauptsächlich Glas, da es eine sehr hohe Transparenz im Wellenlängenbereich 400 bis 1600 nm aufweist. Aber auch polymere Fasern werden aufgrund ihrer Stabilität teilweise eingesetzt, allerdings mit der Einschränkung, daß deren hohe Dämpfung nur kurze Meßstrecken zuläßt. Das Meßprinzip beruht auf Veränderungen des im Lichtleiter geführten Lichts infolge von Umgebungseinflüssen. Diese Einflußparameter wirken in der Regel nicht unmittelbar auf den Lichtleiter selbst, sondern auf eine spezielle sensitive Schicht, die dadurch ihre optischen Eigenschaften verändert, z.B. die Brechzahl. Besitzt die sensitive Schicht eine niedrigere Brechzahl als der Wellenleiter, breitet sich ein Teil des elektrischen Feldes des geführten Lichtes in diese Schicht aus und bildet das sogenannte evaneszente Feld. Über diese Wechselwirkung des Lichtstrahls mit dem Schichtmaterial können optische Veränderungen der Schicht leicht detektiert werden. Ein wesentliches Element des optischen Sensors ist somit die sensitive Schicht, deren Brechzahländerung eindeutig auf eine Reaktion oder Wechselwirkung mit den zu bestimmenden Umgebungsparametern zurückzuführen sein muß.

Als sensitive Schichten werden bisher Polymere eingesetzt, in die sensitive Moleküle wie z.B. Enzyme oder Farbstoffe eingelagert sind. Diese Schichtmaterialien weisen jedoch in vielen Fällen eine Brechzahl > 1,6 auf und sind auch in herkömmlichen Faserziehprozessen nur schlecht zu verarbeiten.

Aus der EP-A-0 487 992 ist ein Interferometer bekannt, das aus optischen Wellenleitern aufgebaut ist die eine Beschichtung aus Heteropolysiloxanen aufweisen.

Ausgehend hiervon ist es die Aufgabe der vorliegenden Erfindung einen faseroptischen Sensor vorzuschlagen, der ein Schichtmaterial aufweist, dessen Brechzahl < 1,6 ist und bei dessen Herstellung eine Verarbeitung des Schichtmaterials in einem herkömmlichen Faserziehprozeß möglich ist.

Diese Aufgabe wird durch die kennzeichnenden Merkmale des Patentanspruchs 1 gelöst.

Die Unteransprüche zeigen vorteilhafte Weiterbildungen auf.

Erfindungsgemäß wird somit vorgeschlagen, daß das Beschichtungsmaterial der sensitiven Schicht aus einer bestimmten ausgewählten Klasse von Siloxane besteht, wobei diese Silane frei zugängliche Thioether oder Aminogruppen aufweisen, so daß speziell für die Detektion von SO, und CO, entsprechende Reaktionsstellen zur Verfügung stehen. Es hat sich gezeigt, daß die faseroptischen Sensoren gemäß der vorliegenden Erfindung Brechzahlen von < 1,6 aufweisen und sich somit gegenüber denen aus dem Stand der Technik überlegen zeigen. Die Erzielung eines Brechungsindex < 1,6 ist insbesondere für faseroptische Sensoren mit langen Meßstrecken besonders wichtig. Ein weiterer Vorteil der erfindungsgemäßen faseroptischen Sensoren besteht darin, daß zur Herstellung der für die sensitiven Schicht notwendigen Polysiloxane Verbindungen der allgemeinen Formel I 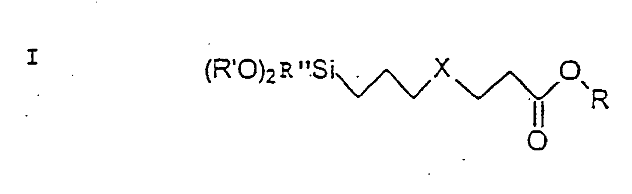 worin
- R: ein geradkettiger oder verzweigter organischer Rest, abgeleitet von einer Verbindung R''' mit mindestens 2 Doppelbindungen und 5 bis 50 C-Atomen,
- R': ein C₁-C₄ Alkyl
- R": Methyl ein C₁-C₄ Alkyl, Cyclohexyl, Phenyl, oder Aryl und
- X: S oder NH
ist,
eingesetzt werden, die als Zwischenprodukt erhältlich sind, so daß Polysiloxane, hergestellt aus Verbindungen der allgemeinen Formel I mittels konventioneller Beschichtungstechnik in Lösung oder als lösungsmittelfreies Harz appliziert werden können. Reaktive Gruppen im Rest R ermöglichen dabei über bekannte Polymerisationsverfahren eine zusätzliche Vernetzung und die Aushärtung des Materials auf dem Substrat. Dadurch wird es auch möglich, daß eine Verarbeitung im herkömmlichen Faserziehprozeß, d.h. z.B UV-härtbar, in 0,1-20 sek. möglich wird. Wesentlich beim Anmeldungsgegenstand ist somit, daß die reaktiven, sensitiven Moleküle oder Gruppen kovalent an das Beschichtungsmaterial angebunden sind. Bei den herkömmlichen, integriert optischen oder faseroptischen Sensoren wurde bisher in allen Fällen mit einfach eingelagerten Molekülen, z.B. Enzymen oder Farbstoffen, gearbeitet.

Die Polysiloxane, die als sensitive Schicht für die erfindungsgemäßen faseroptischen Sensoren eingesetzt werden, sind an und für sich aus dem Stand der Technik bekannt. Diese Verbindungen werden allgmeine als ORMOCERe® bezeichnet. So werden z.B. in der EP 0 454 624 A2 oder der EP 0 451 709 A2 thioetherhaltige Acrylat-Siloxan-Schichten beschrieben.

In der EP 0 230 342 B1 sind verschiedene Acrylat-Amino-Silan-Verbindungen mit Polysiloxanen beschrieben. Weitere geeignete Verbindungen sind aus der DE 40 11 044 C2 bekannt. Auf den Offenbarungsgehalt dieser Dokumente wird deshalb ausdrücklich Bezug genommen.

Bei den Verbindungen der allgmeinen Formel I sind insbesondere die bevorzugt, bei denen R' und R'' Methyl oder Ethyl ist.

Der Rest R leitet sich ab von einer substituierten oder unsubstituierten Verbidung mit mindestens zwei C-C-Doppelbindungen, z.B. Vinyl-, Allyl-, Acryl- und-/oder Methacrylgruppen, und 5-50, vorzugsweise 6 bis 30 Kohlenstoff-Atomen. Vorzugsweise leitet sich R ab von einer substituierten oder unsubstituierten Verbidung mit zwei oder mehreren Acrylat- oder Methacrylatgruppen. Falls die Verbindung R substituiert ist, können die Substituenten unter den o.g. Substituenten ausgewählt sein.

Spezielle Beispiele für den Rest R sind die folgenden:

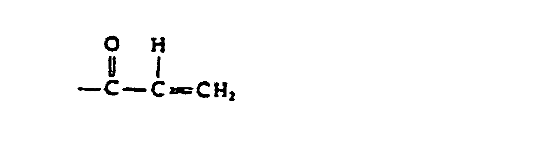

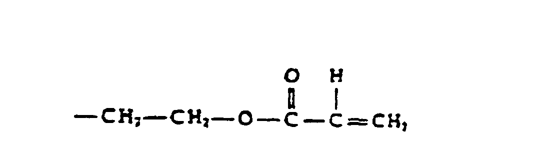

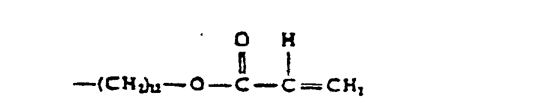

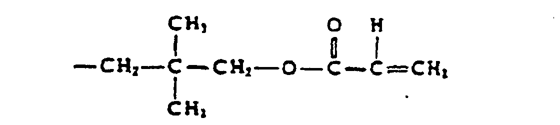

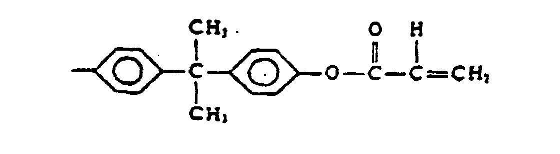

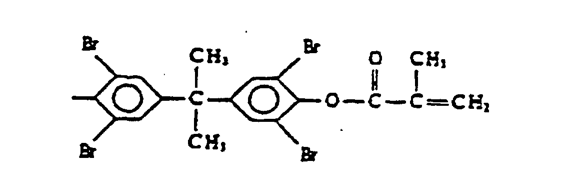

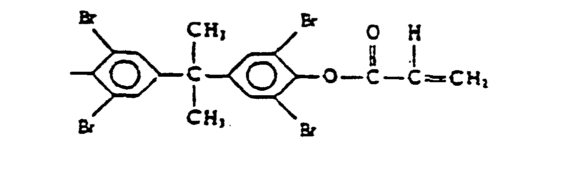

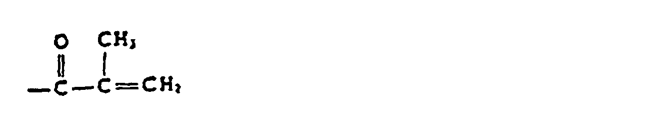

-CH₂-CH=CH₂

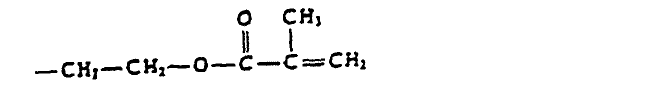

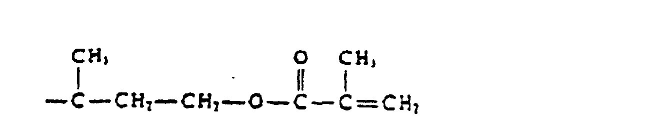

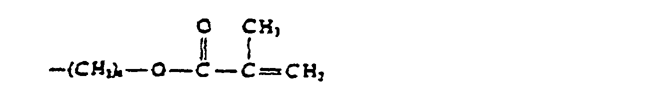

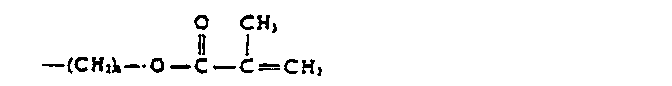

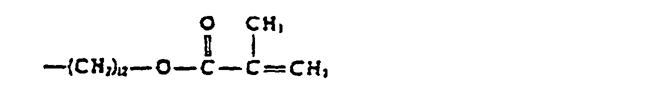

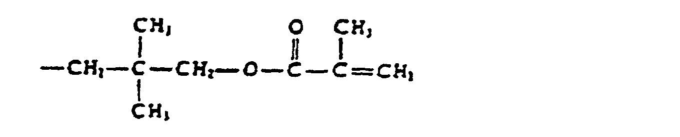

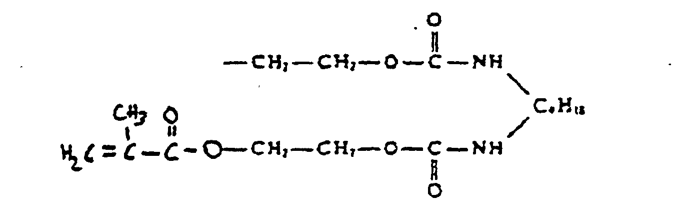

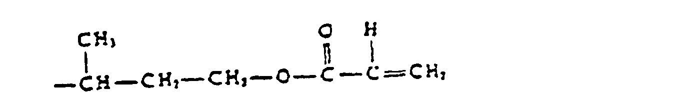

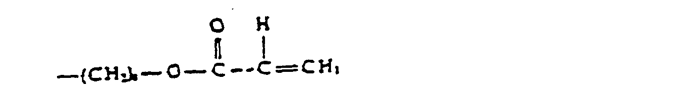

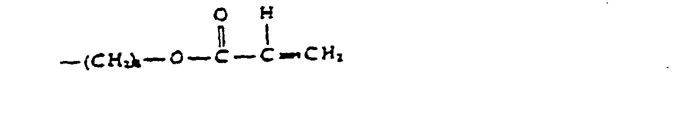

Die besonders bevorzugten Polysiloxane weisen als R einen der folgenden Reste auf:
R = 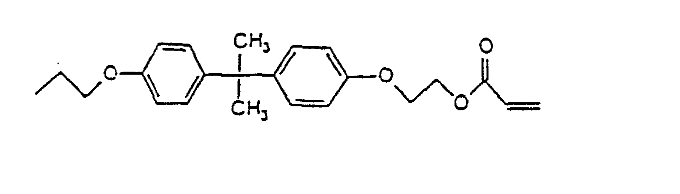 oder
R = 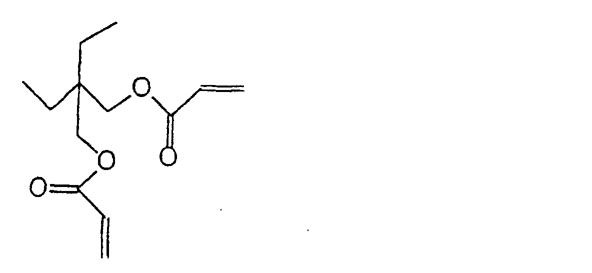 oder
R = 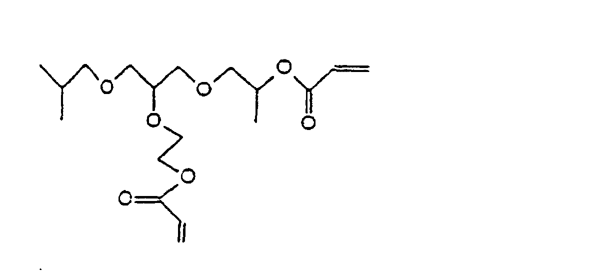 oder
R = 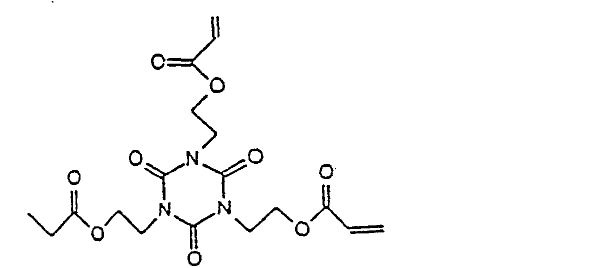 oder
R =

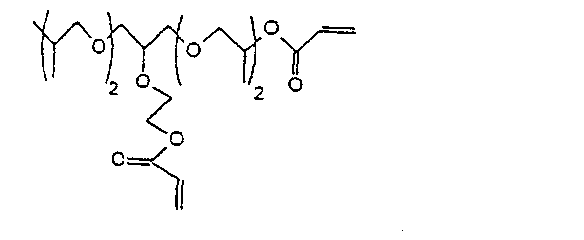

Es hat sich in Versuchen gezeigt, daß es insbesondere zur Erzielung eines Brechungsindexes von < 1,457 vorteilhaft ist, wenn die Hydrolyse in Gegenwart von fluorierten Acrylat- oder Vinyl-Verbindungen oder in Gegenwart einer weiteren Alkoxysilan-Verbindung durchgeführt wird.

Bei den fluorierten Verbindungen sind insbesondere die der allgemeinen Formel II 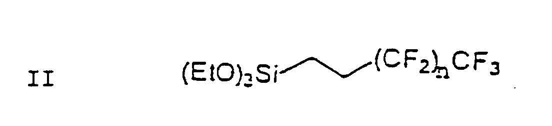 bevorzugt, worin n = 3 - 7, besonders bevorzugt n = 5 oder 6 ist. Als weitere Alkoxysilan-Verbindungen können insbesondere die der allgemeinen Formel III

III R''''Si(OR'''')₂

eingesetzt werden, wobei hier besonders bevorzugt R''''- Methyl ist.

Neben den UV-härtenden, acrylatbasierenden Siloxanen ist es erfindungsgemäß auch möglich, thermisch härtende Siloxane z.B. auf Epoxysiloxan-Basis einzusetzen (Patentanspruch 11). Verbindungen dieses Typs sind durch die allgemeine Formel V

V XₐSiR₄₋ₐ

definiert. In den Verbindungen des Typs V ist X = Wasserstoff, Halogen, Hydroxy, Alkoxy, Acyloxy, Alkylcarbonyl, Alkoxycarbonyl, R = ein geradkettiger oder verzweigter organischer Rest mit 1 bis 50 Kohlenstoffatomen, bevorzugt Alkyl, Alkenyl, Aryl, Alkylaryl oder Arylalkyl, wobei die Reste durch Schwefel oder Sauerstoffatome durch Urethan-, Ester, Carbonyl-, Amid- oder Aminogruppen unterbrochen sein können und/oder mindestens eine Epoxid- oder Anhydridgruppe aufweist, und a=1,2 oder 3.

In einer weiteren Ausgestaltung der Erfindung (Patentanspruch 11) ist vorgesehen, daß die vorstehend beschriebene sensitive Schicht zusätzlich auch Metallkomplexe enthalten kann. Die Metallkomplexe können entweder über Gel-Entrapment in das Siloxanharz physikalisch eingelagert werden oder bei entsprechender Modifizierung mit Alkoxysilylgruppen über Hydrolyse und Kondensataion während der Synthese mit dem Siloxangerüst über chemische Bindung verbunden werden.

Der große Vorteil dieser Ausgestaltung der Erfindung besteht darin, daß der größte Teil der Metallkomplexe vorwiegend mit CO₂ vollständig reversibel reagiert.

Als Metallkomplexe kommen bevorzugt Kupferkomplexe, Aluminium- und Zinkkomplexe in Frage.

Bei den Kupferkomplexen ist insbesondere ein Kupfer/-Ephedrinkomplex der nachfolgenden chemischen Formel bevorzugt:

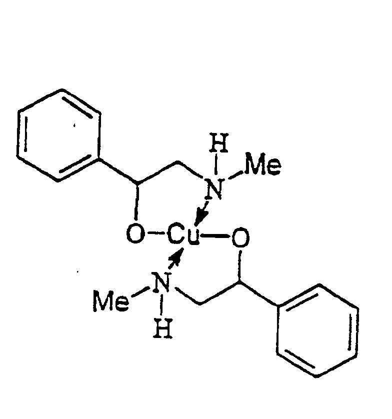

Bei der Sensorreaktion kommt es zu Insertion von CO₂ unter Verschiebung des Absorptionsmaximums im UV-VIS-Bereich, wie durch nachfolgende Reaktion gezeigt:

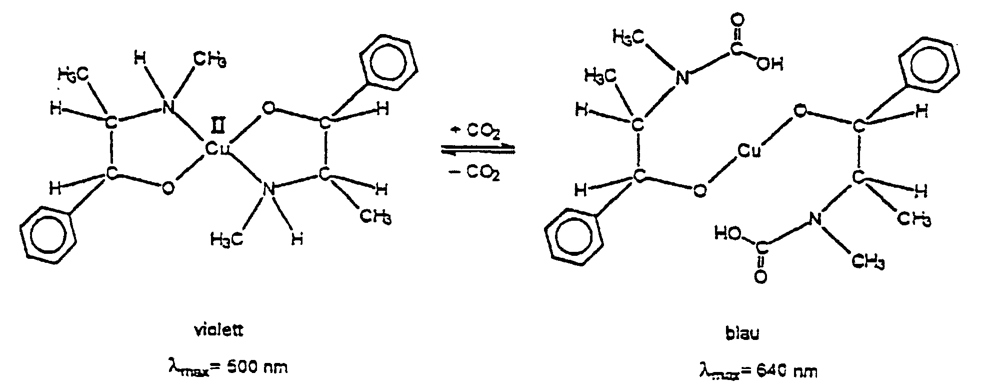

Der Ephedrinligand kann zusätzlich über seine N-H-Funktion modifiziert werden durch Anbindung einer Alkoxysilanverbindung. Dadurch ist ein fester Einbau des gesamten Metallkomplexes über Hydrolyse/Kondensation in das Polysiloxangerüst möglich.

Der Ephedrinligand kann auch, wie nachfolgend gezeigt, modifiziert sein:

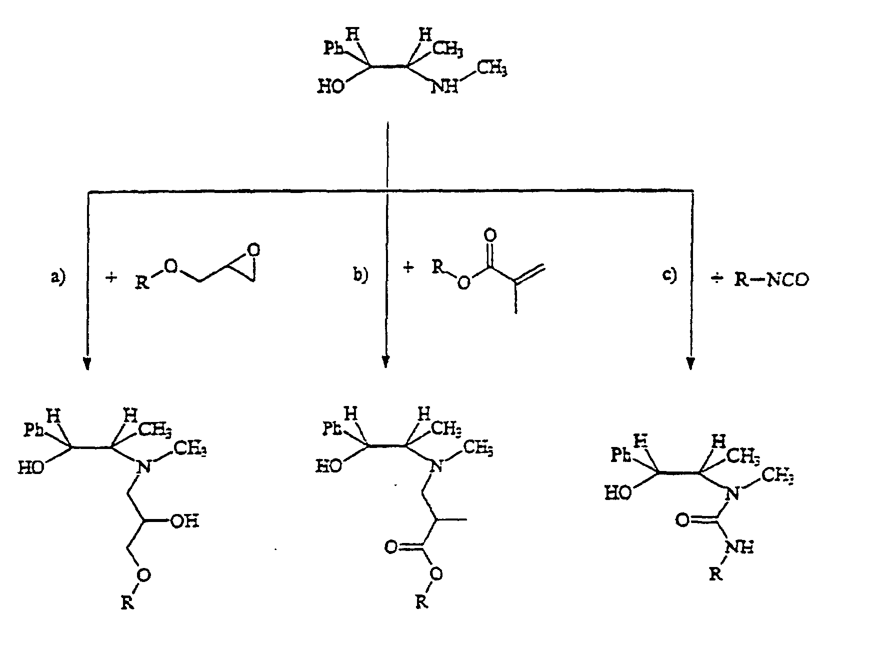

R=(CH₂)₃Si(OR)₃ R'=Me, Et

Ein weiter bevorzugter Kupfer-Komplex ist ein Kupfer/Ethanolamin-Komplex, bei dem die Insertion von CO₂ analog dem Ephedrinkomplex unter Verschiebung des Absorptionsmaximums im UV-VIS-Bereich von 590 nm zu 730 nm erfolgt.

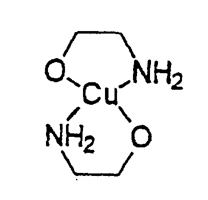

Der Ethanolaminligand kann zusätzlich über seine N-H-Funktion modifiziert werden, z.B. durch Anbindung von Methacryloxypropyltrimethoxysilan oder Acryloxypropylmethyldimethoxysilan. Dadurch ist fester Einbau des gesamten Metallkomplexes über Hydrolyse/Kondensation in das Polysiloxangerüst möglich.

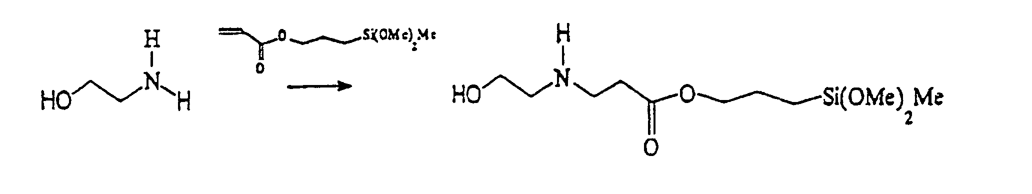

Ein weiteres Beispiel für einen Kupfer-Komplex ist ein Kupfer/Butoxid-Komplex. Hier ist eine Insertion von CO₂ IR-spektroskopisch beobachtbar über die Bildung eines IR-Signals bei 1653 cm⁻¹.

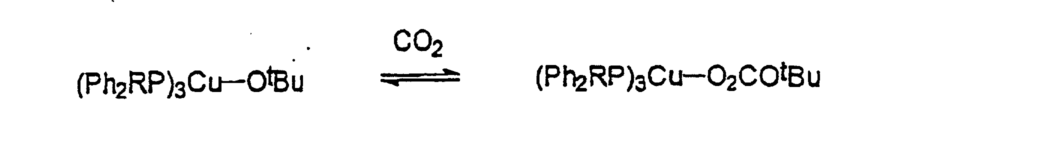

Wenn R = Phenyl ist, kann der Komplex über Gel-Entrapment eingelagert werden.
Wenn R = -CH₂CH₂CH₂Si(OMe)₃ ist, kann der Komplex über Hydrolyse- und Kondensationsreaktion fest eingebaut werden.

Beispiele für Aluminium- und Zink-Komplexe sind Tetraphenylporphyrin-Aluminiumchlorid und -ethoxid (Einbau über Gel-Entrapment). Auch hier ist Insertion von CO₂ IR-spektroskopisch beobachtbar über die Bildung eines IR-Signals bei 1718 cm⁻¹.

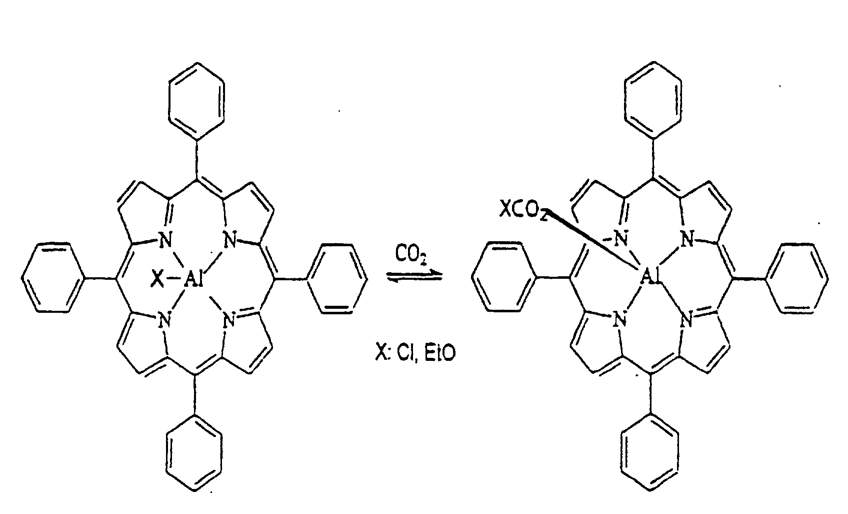

Ein Metallkomplex, der durch Gel-Entrapment in das Siloxangerüst eingebaut werden kann, ist Zink-(5,12-Dimethyl-1,4,8,11-tetraazacyclotetradecan)-Perchlorat.

Auch hier ist eine Insertion von CO₂ IR-spektroskopisch beobachtbar über die Bildung eines IR-Signals bei 1692 cm⁻¹.

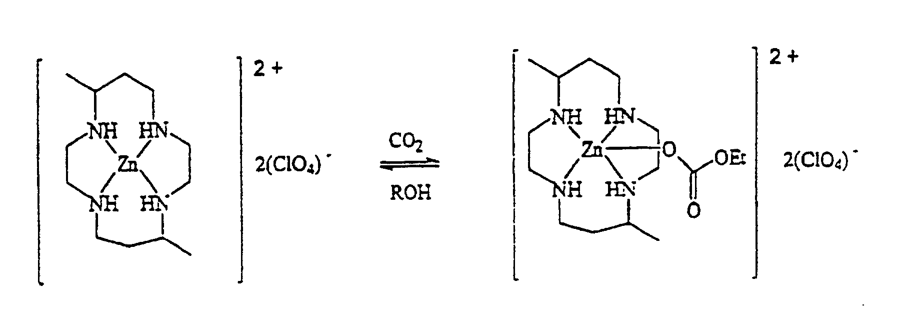

Die Erfindung wird nachfolgend anhand eines allgemeinen Reaktionschema und speziell ausgewählten Beispielen näher erläutert.

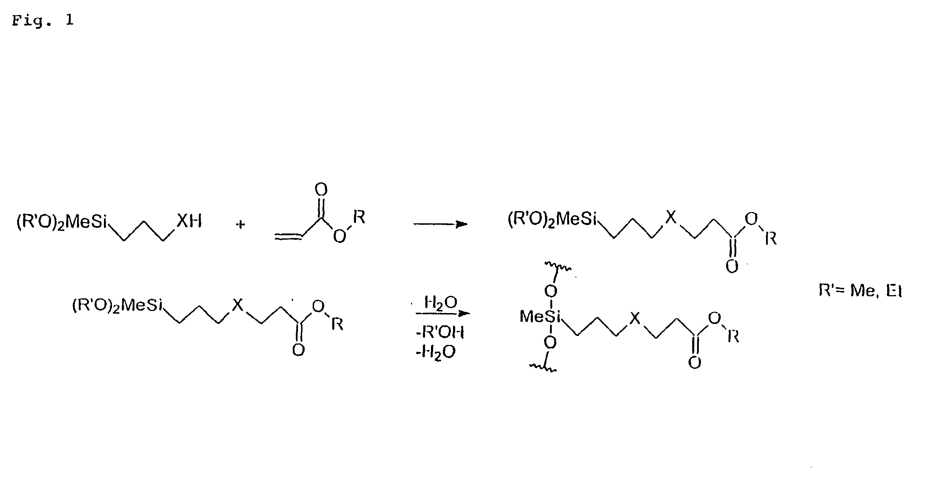

In Fig. 1 ist ein allgemeines Herstellungsschema angegeben, mit dem die Polysiloxane, die man für die faseroptischen Sensoren einsetzt, hergestellt werden können. Im Beispiel nach Fig. 1 ist R'' Methyl.

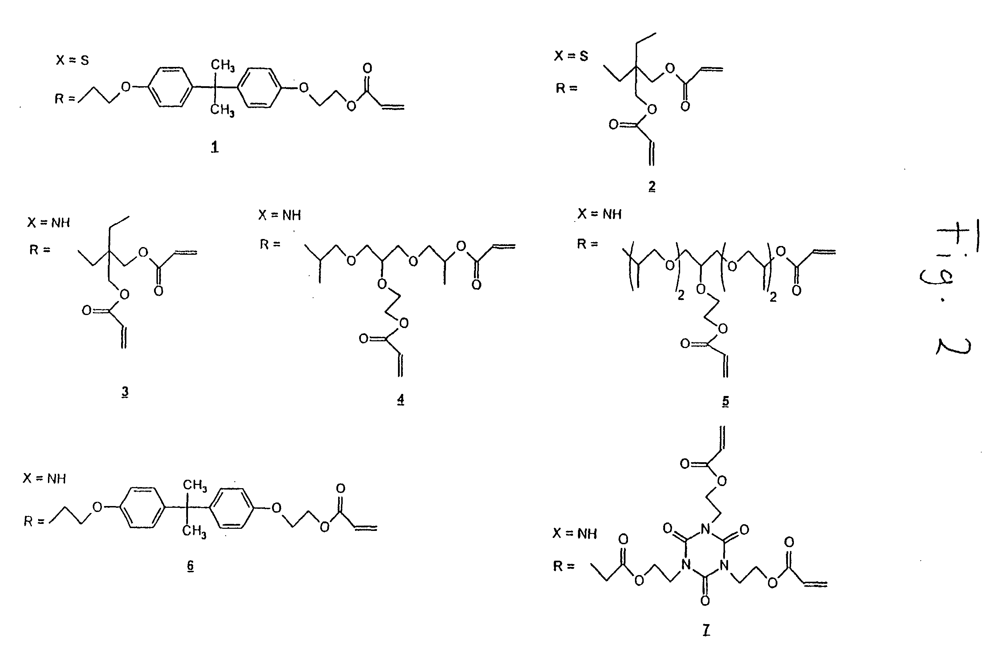

In Fig. 2 sind hierbei die verwendeten Reste R und X angegeben, aus denen dann die damit hergestellten Verbindungen 1 - 7 resultieren.

Fig. 3 zeigt nun ein allgemeines Herstellungsschema, wie zum einen fluorierte Verbindungen eingeführt werden können und zum anderen eine zusätzliche Siloxan-Komponente.

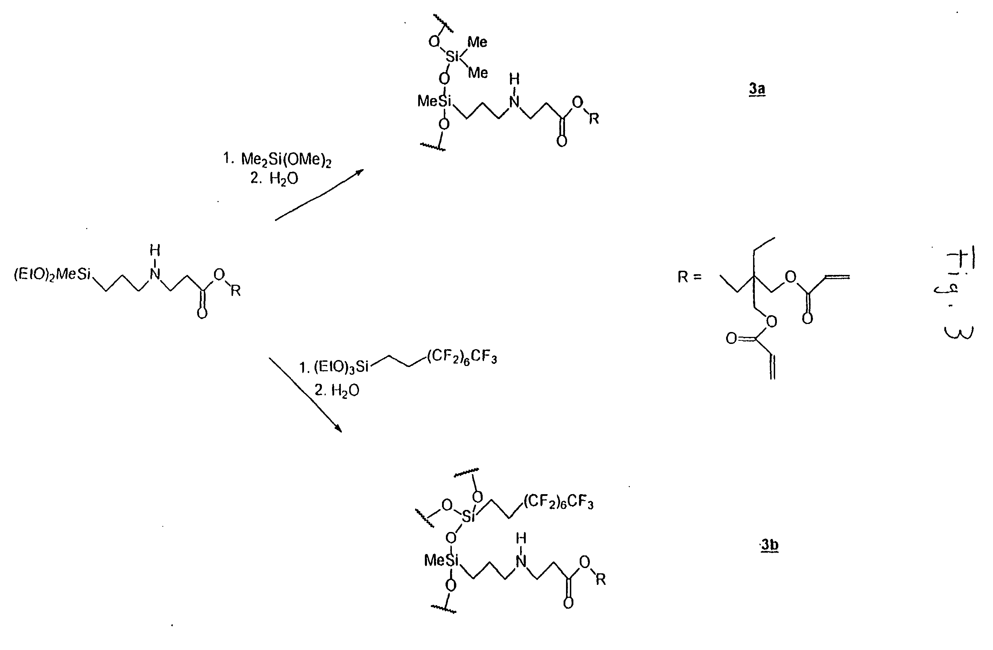

In Fig. 3 sind wiederum zwei ausgewählte Reste angegeben, mit denen die Verbindungen 3a und 3b synthetisiert wurden.

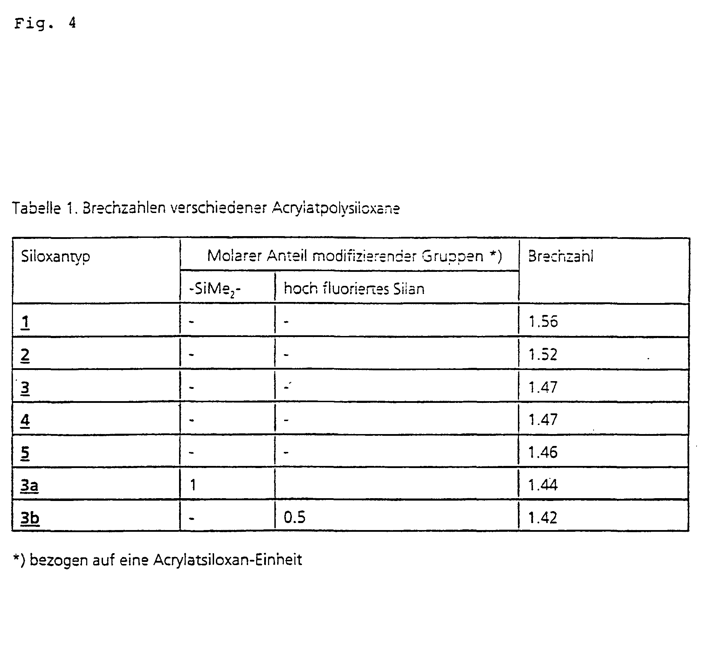

Fig. 4 zeigt eine Tabelle 1), aus der sowohl der molare Anteil der modifizierten Gruppen, wie auch die Brechzahl der erfindungsgemäßen faseroptischen Sensoren hervorgeht. Aus Tabelle 1 geht insbesondere hervor, daß bei den faseroptischen Sensoren, die die Acrylat-Polysiloxane der Beispiele 3a und 3b enthalten, besonders überlegene Eigenschaften in bezug auf die Brechzahl aufweisen.

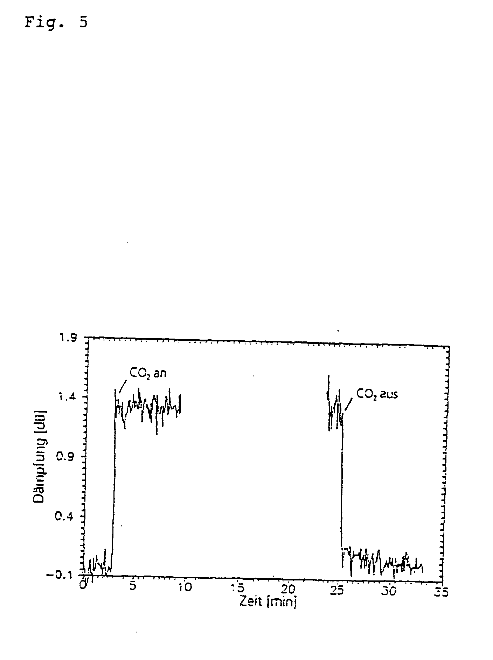

Mit einem faseroptischen Sensor, der eine sensitive Schicht nach Beispiel 3 enthielt, wurde CO₂ detektiert. Die Meßergebnisse sind aus Fig. 5 zu entnehmen.

Fig. 5 zeigt die Detektion von CO₂ durch Messung der veränderten Dämpfung des Lichtsignals infolge des CO₂-Einflusse auf die funktionellen Gruppen der Schicht in 3 (Lichtwellenlänge 1200 nm, Faserlänge 15 cm, Faserdurchmesser 200 µm, Schichtdicke der sensitiven Schicht 5 µm).

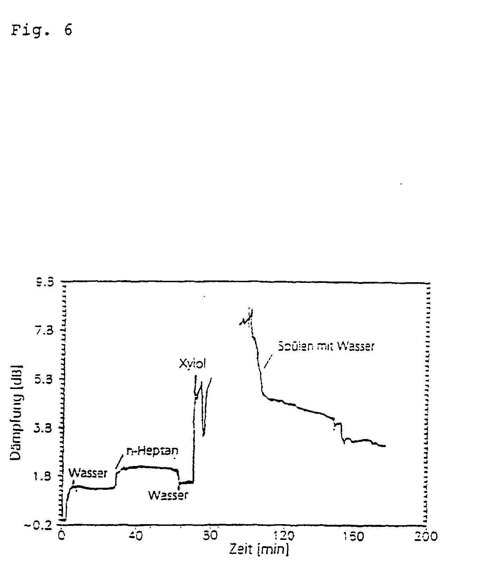

Durch Eindiffundieren von Kohlenwasserstoffen, z.B. Heptan oder Xylolen in einer unpolaren sensitiven Schicht ändert sich der Brechungsindex der Schicht, so daß die Anwesenheit des Kohlenwasserstoffes auch in Wasser über einen faseroptischen Sensor detektierbar ist. Diese Meßergebnisse sind in Fig. 6 dargestellt.

Fig. 6 zeigt die Detektion von Heptan und Xylol in wäßriger Lösung durch Messung der veränderten Dämpfung.

## Patentansprüche

1. Faseroptischer Sensor, bestehend aus einem Lichtleiter und einer darauf aufgebrachten sensitiven Schicht,
**dadurch gekennzeichnet,**
**daß** die sensitive Schicht aus einem Polysiloxan besteht, das durch Hydrolyse einer Verbindung der allgemeinen Formel I, 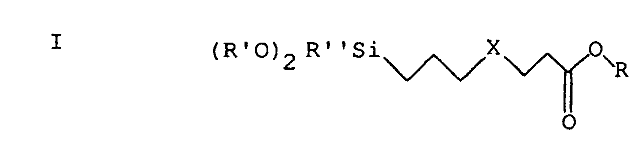 worin
R ein geradkettiger oder verzweigter organischer Rest, abgeleitet von einer Verbindung R''' mit mindestens 2 Doppelbindungen und 5 bis 50 C-Atomen,
R' ein C₁-C₄ Alkyl
R'' ein C₁-C₄ Alkyl, Cyclohexyl, Phenyl,
oder Aryl und
X S oder NH ist,
in Gegenwart von fluorierten Acrylat- oder Vinylverbindungen hergestellt wird und die Schicht einen Brechungsindex < 1,6 besitzt.

2. Faseroptischer Sensor nach Anspruch 1,
**dadurch gekennzeichnet, daß** die fluorierte Verbindung eine Verbindung der allgemeinen Formel II 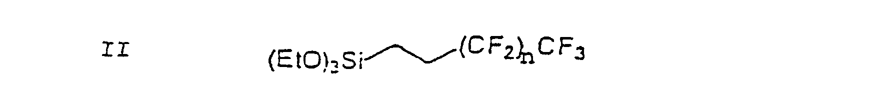 mit n = 3 - 7 ist.

3. Faseroptischer Sensor nach Anspruch 1,
**dadurch gekennzeichnet, daß** die Hydrolyse in Gegenwart von weiteren Alkoxysilan-Verbindungen durchgeführt wird.

4. Faseroptischer Sensor nach Anspruch 3,
**dadurch gekennzeichnet, daß** die Alkoxysilan-Verbindung eine Verbindung der allgemeinen Formel III ist,
III R''''Si(OR'''')₂
worin R'''' ein C₁- C₄ Alkyl ist.

5. Faseroptischer Sensor nach mindestens einem der Ansprüche 1 bis 4, **dadurch gekennzeichnet, daß**

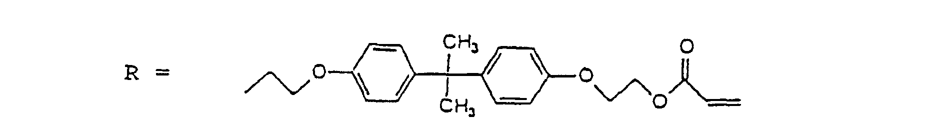

6. Faseroptischer Sensor nach mindestens einem der Ansprüche 1 bis 4, **dadurch gekennzeichnet, daß**

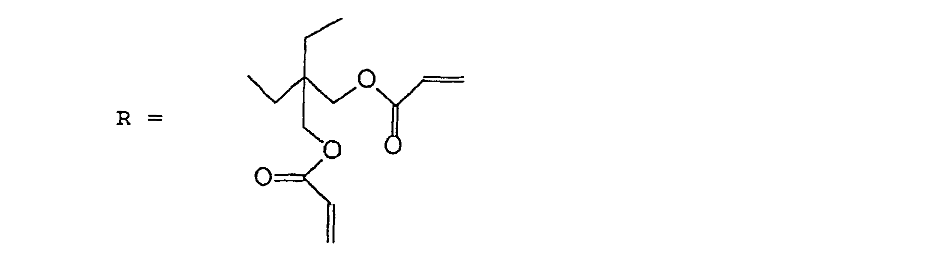

7. Faseroptischer Sensor nach mindestens einem der Ansprüche 1 bis 4, **dadurch gekennzeichnet, daß**

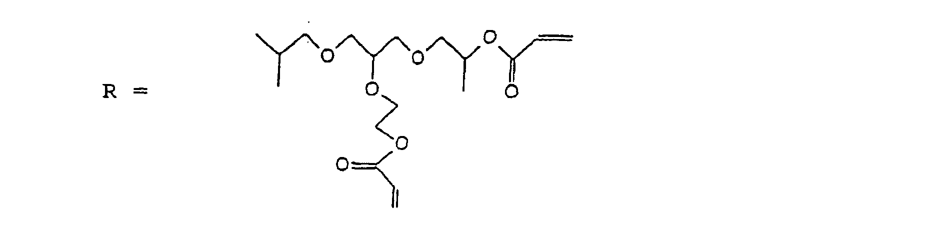

8. Faseroptischer Sensor nach mindestens einem der Ansprüche 1 bis 4,
**dadurch gekennzeichnet, daß**

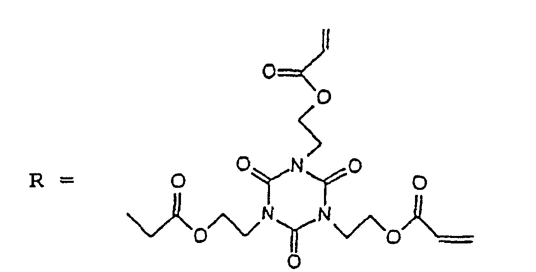

9. Faseroptischer Sensor nach mindestens einem der Ansprüche 1 bis 4,
**dadurch gekennzeichnet, daß**

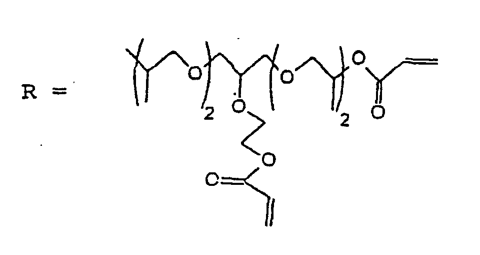

10. Faseroptischer Sensor nach Anspruch 3,
**dadurch gekennzeichnet, daß** die Alkoxysilanverbindung eine Verbindung der allgemeinen Formel V ist,
V XₐSiR₄₋ₐ
worin
X = Wasserstoff, Halogen, Hydroxy, Alkoxy, Acyloxy, Alkylcarbonyl, Alkoxycarbonyl,
R = ein geradkettiger oder verzweigter organischer Rest mit 1 bis 50 Kohlenstoffatomen, bevorzugt Alkyl, Alkenyl, Aryl, Alkylaryl oder Arylalkyl, wobei die Reste durch Schwefel oder Sauerstoffatome durch Urethan-, Ester, Carbonyl-, Amid- oder Aminogruppen unterbrochen sein können und/oder mindestens eine Epoxid- oder Anhydridgruppe aufweist und das a=1,2 oder 3 ist.

11. Faseroptischer Sensor nach mindestens einem der Ansprüche 1 bis 16,
**dadurch gekennzeichnet, daß** die sensitive Schicht zusätzlich Metallkomplexe enthält, die entweder über Gel-Entrapment in das Siloxanharz physikalisch eingelagert und/oder über eine chemische Bindung mit dem Siloxangerüst verbunden sind.

## Claims

1. Fibre optic sensor, comprising a light guide and a sensitive layer applied thereto, **characterised in that** the sensitive layer is composed of a polysiloxane, which is produced by hydrolysis of a compound of the general formula I: 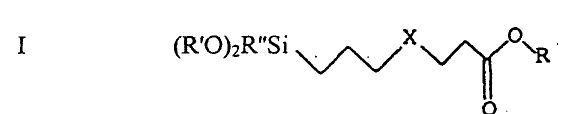 wherein
R is a straight-chain or branched organic residue, derived from a compound R"' with at least 2 double bonds and 5 to 30 C atoms,
R' is a C₁-C₄ alkyl
R" is a C₁-C₄ alkyl, cyclohexyl, phenyl or aryl, and
X is S or NH,
in the presence of fluorinated acrylate or vinyl compounds and the layer has a refractive index of < 1.6.

2. Fibre optic sensor according to Claim 1, **characterised in that** the fluorinated compound is a compound of the general formula II: 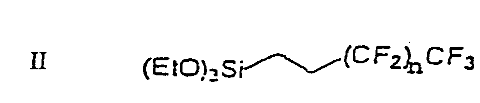 where n = 3 - 7.

3. Fibre optic sensor according to Claim 1, **characterised in that** the hydrolysis is conducted in the presence of further alkoxysilane compounds.

4. Fibre optic sensor according to Claim 3, **characterised in that** the alkoxysilane compound is a compound of the general formula III:
III R''''Si(OR'''')₂
wherein R'''' is a C₁-C₄ alkyl.

5. Fibre optic sensor according to at least one of Claims 1 to 4, **characterised in that**
R=

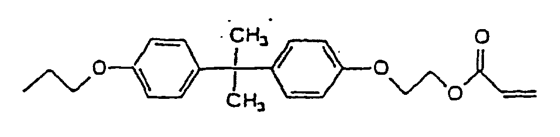

6. Fibre optic sensor according to at least one of Claims 1 to 4, **characterised in that**
R=

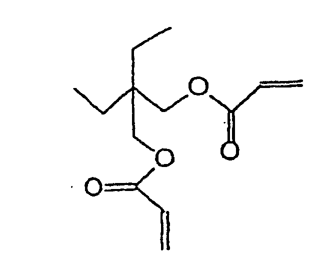

7. Fibre optic sensor according to at least one of Claims 1 to 4, **characterised in that**
R=

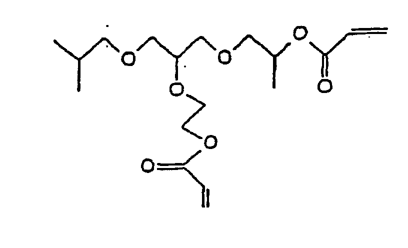

8. Fibre optic sensor according to at least one of Claims 1 to 4, **characterised in that**
R=

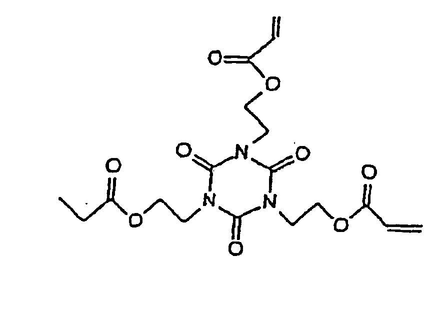

9. Fibre optic sensor according to at least one of Claims 1 to 4, **characterised in that**
R=

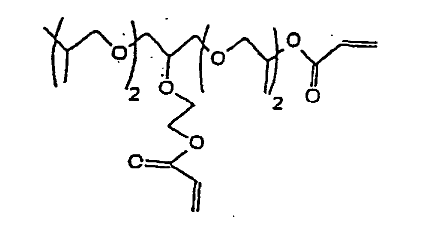

10. Fibre optic sensor according to Claim 3, **characterised in that** the alkoxysilane compound is a compound of the general formula V:
V XₐSiR₄₋ₐ
wherein
X = hydrogen, halogen, hydroxy, alkoxy, acyloxy, alkylcarbonyl, alkoxycarbonyl
R = a straight-chain or branched organic residue with 1 to 50 carbon atoms, preferably alkyl, alkenyl, aryl, alkylaryl or arylalkyl, wherein the residues can be broken by sulphur or oxygen atoms by urethane, ester, carbonyl, amide or amino groups and/or have at least one epoxide or anhydride group and a=l, 2 or 3.

11. Fibre optic sensor according to at least one of Claims 1 to 10, **characterised in that** the sensitive layer additionally contains metal complexes, which are either physically embedded into the siloxane resin via gel entrapment and/or are joined to the siloxane skeleton via a chemical bond.

## Revendications

1. Capteur à fibres optiques composé d'un conducteur à fibres optiques et une couche sensible,
**caractérisé en ce que**
la couche sensible est constituée d'un polysiloxane qui est produit par hydrolyse d'un composé répondant à la formule générale 1 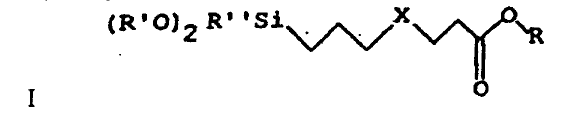 dans laquelle
R représente un reste organique à chaîne linéaire ou ramifié, dérivé d'un composé R''' ayant au moins 2 doubles liaisons et de 5 à 50 atomes de C,
R' un alkyle en C₁₋₄,
R" un alkyle en C₁-C₄, un cyclohexyle, un phényle ou un aryle et
X S ou NH
en présence de composés fluorés d'acrylate ou de vinyle et la couche possède un indice de réfraction < 1,6.

2. Capteur à fibres optiques selon la revendication 1,
**caractérisé en ce que**
le composé fluoré répond à la formule générale II 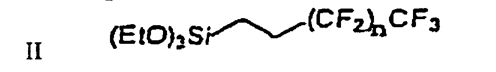 où n = 3 - 7.

3. Capteur à fibres optiques selon la revendication 1,
**caractérisé en ce que**
l'hydrolyse est réalisée en présence d'autres composés d'alcoxysilane.

4. Capteur à fibres optiques selon la revendication 3,
**caractérisé en ce que**
le composé d'alcoxysilane répond à la formule générale III
III R''''Si(OR'''')₂
dans laquelle R"" représente un alkyle en C₁-C₄.

5. Capteur à fibres optiques selon au moins l'une des revendications 1 à 4,
**caractérisé en ce que**
R =

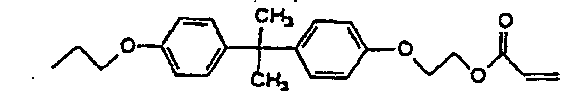

6. Capteur à fibres optiques selon au moins l'une des revendications 1 à 4,
**caractérisé en ce que**
R =

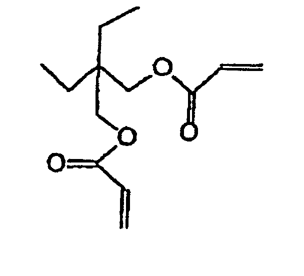

7. Capteur à fibres optiques selon au moins l'une des revendications 1 à 4,
**caractérisé en ce que**
R =

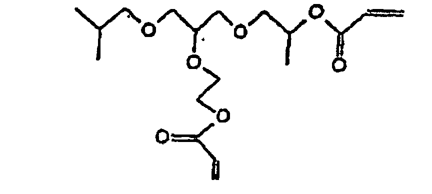

8. Capteur à fibres optiques selon au moins l'une des revendications 1 à 4,
**caractérisé en ce que**
R =

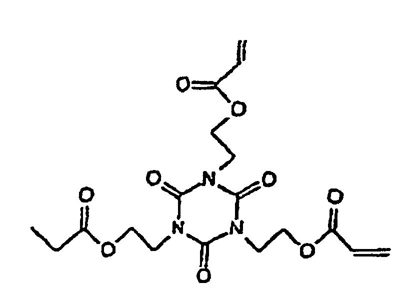

9. Capteur à fibres optiques selon au moins l'une des revendications 1 à 4,
**caractérisé en ce que**
R =

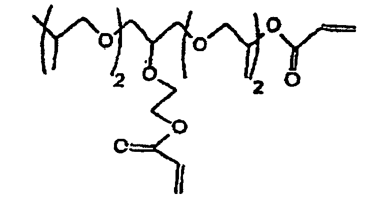

10. Capteur à fibres optiques selon la revendication 3,
**caractérisé en ce que**
le composé d'alcoxysilane répond à la formule générale V
V XₐSiR₄₋ₐ
dans laquelle
X = hydrogène, halogène, hydroxy, alcoxy, acyloxy, alkylcarbonyle, alcoxycarbonyle,
R = un reste organique à chaîne linéaire ou ramifié ayant de 1 à 50 atomes de carbone, de manière préférable alkyle, alkényle, aryle, alkylaryle ou arylalkyle, où les restes peuvent être interrompus par du soufre ou les atomes d'oxygène par des groupes uréthane, ester, carbonyle, amide ou amino et/ou présentent au moins un groupe époxy ou anhydride, et a = 1, 2 ou 3.

11. Capteur à fibres optiques selon au moins l'une des revendications 1 à 10,
**caractérisé en ce que**
la couche sensible contient également des complexes métalliques, qui sont intégrés par moyen physique par inclusion sous forme de gel dans la résine de siloxane et/ou liés par liaison chimique avec la charpente de siloxane.
